# EUROPÄISCHE PATENTSCHRIFT

(11) **EP 0 895 881 B1**
(45) Veröffentlichungstag und Bekanntmachung des Hinweises auf die Patenterteilung: **07.11.2001**
(21) Anmeldenummer: 98114414.0
(22) Anmeldetag: 31.07.1998
(51) Int. Cl.: B60G 3/14

(54) **Kurbelachse für Kraftfahrzeuge und Anhänger**
Suspension with longitudinal arms for motorvehicles and trailers
Suspension à bras longitudinaux pour véhicules à moteur et remorques

(30) Priorität: 06.08.1997 DE 19733968
(43) Veröffentlichungstag der Anmeldung: 10.02.1999
(73) Patentinhaber: BPW Bergische Achsen Kommanditgesellschaft, 51674 Wiehl (DE)
(72) Erfinder: Deinert, Lars, 51674 Wiehl (DE); Thiel, Klaus-Hermann, 51545 Waldbröl (DE)
(74) Vertreter: Stenger, Watzke & Ring Patentanwälte

(56) Entgegenhaltungen:
- EP-B- 0 464 412
- EP-B- 0 464 415
- DE-U- 8 337 131
- US-A- 2 816 753

## Beschreibung

Die Erfindung betrifft eine Kurbelachse für Kraftfahrzeuge und Anhänger mit einzeln an jeweils einem Längslenker gelagerten Rädern, wobei jeder Längslenker über ein an ihm befestigtes Führungsrohr verschwenkbar in einem Achsrohr gelagert ist, das über Tragkonsolen mit den Längsträgern des Fahrzeugrahmens verbindbar ist, und wobei jedes Rad unabhängig vom anderen über eine zwischen zwei Konsolen angeordnete Luftfeder abgefedert ist.

Derartige an Kraftfahrzeugen und Anhängern einsetzbare Kurbelachsen sind beispielsweise aus den EP 0 464 412 B1 und 0 464 415 B1 bekannt. Bei diesen bekannten Konstruktionen ist die Luftfeder zwischen einer mittels einer Zusatzkonstruktion an Querträgern des Fahrzeugrahmens befestigten oberen Konsole und einer unteren Konsole angeordnet, die an einem Tragarm befestigt ist, der über das Führungsrohr mit dem jeweiligen Längslenker verbunden ist und radial aus dem Achsrohr herausragt. Außer der Notwendigkeit, die obere Konsole der Luftfeder mittels einer zusätzlichen Hilfskonstruktion am Fahrzeugrahmen befestigen zu müssen, hat die bekannte Konstruktion den Nachteil eines großen Konstruktionsaufwandes und eines hohen Eigengewichts. Der Vorteil der bekannten Konstruktion besteht in einem hohen Fahrkomfort und der Möglichkeit, das Fahrzeug zum Be- und Entladen anzuheben oder abzusenken und aufgrund der Einzelradaufhängung die beiden Radseiten unabhängig voneinander zwecks Niveauausgleich des abgestellten Fahrzeuges zu heben bzw. zu senken.

Der Erfindung liegt die **Aufgabe** zugrunde, eine für Kraftfahrzeuge und Anhänger verwendbare Kurbelachse der eingangs beschriebenen Art unter Aufrechterhaltung der voranstehend erwähnten Vorteile mit dem Ziel einer Konstruktionsvereinfachung und Gewichtsreduzierung derart weiterzuentwickeln, daß eine kompakte Kurbelachse entsteht, die ohne zusätzliche Hilfskonstruktionen auf einfache Weise unter einem Fahrzeugrahmen montiert werden kann.

Die **Lösung** dieser Aufgabenstellung durch die Erfindung ist dadurch gekennzeichnet, daß die untere Konsole jeder Luftfeder über einen unteren Tragarm unmittelbar am jeweiligen Längslenker und die obere Konsole jeder Luftfeder über einen oberen Tragarm am Achsrohr befestigt ist.

Mit der erfindungsgemäß weitergebildeten Kurbelachse wird der Vorteil erreicht, daß die Radaufstandskräfte direkt über den Längslenker und den unteren Tragarm auf die Luftfeder und von dieser über den oberen Tragarm auf das Achsrohr übertragen werden, das seinerseits über Tragkonsolen an den Längsträgern des Fahrzeugrahmens befestigt wird. Außer einer deutlich geringeren Belastung der Lager der Längslenker durch die Aufstandskräfte, die die Verwendung einfacherer und preisgünstigerer Lager ermöglicht, führt die erfindungsgemäße Weiterbildung somit zu einer erheblich einfacheren und preisgünstigeren Montage der Kurbelachse an den Längsträgern des Fahrzeugrahmens, wobei gleichzeitig jegliche Vorgabe einer bestimmten Stelle für die Befestigung eines Hilfsrahmens entfällt und die Möglichkeit gegeben ist, an einem Fahrzeugrahmen auch zwei Kurbelachsen mit kurzem Abstand zueinander zu montieren.

Der untere Tragarm jeder Luftfeder kann entweder zwischen dem Achsstummel und dem zur Lagerung des Längslenkers im Achsrohr dienenden Führungsrohr am Längslenker befestigt sein oder an einer den Achsstummel überragenden Verlängerung des Längslenkers. Durch diese alternativen Ausführungsmöglichkeiten ergibt sich eine große Variationsmöglichkeit für die einzusetzenden Luftfedern und Achsanordnungen.

Gemäß einem weiteren Merkmal der Erfindung werden die Führungsrohre der beiden Längslenker in einem durchgehenden, über die Tragkonsolen starr mit dem Fahrzeugrahmen verbundenen Achsrohr gelagert. Hierdurch ergibt sich eine einfache, auch nachträglich an vorhandene Fahrzeugrahmen anzubringende Kurbelachse mit einer geringen Zahl von Lagerstellen, womit sich auch der Wartungsaufwand verringert.

Alternativ kann gemäß der Erfindung jedes Führungsrohr in einem eigenen Achsrohrstück gelagert sein, das nur über einen Teil der halben Fahrzeugrahmenbreite verläuft und mittels einer zweiten Tragkonsole mit dem Fahrzeugrahmen verbindbar ist. Diese Verbindung kann über mittlere Längsträger des Rahmens oder über den zwischen den äußeren Längsträgern verlaufende Querträger erfolgen. Insgesamt ergibt sich hierdurch eine aus zwei Halbachsen bestehende Kurbelachse, die wiederum einfach auch an vorhandenen Fahrzeugrahmen befestigt werden kann und in der Fahrzeuglängsmitte Raum für die Aufnahme bzw. für den Durchtritt von Ladung schafft, wie zum Beispiel für den Kiel eines Segelschiffes oder für Verkaufsfahrzeuge.

Mit der Erfindung wird schließlich vorgeschlagen, die Tragarme für die oberen Konsolen der Luftfedern im Bereich zwischen den Längsträgern des Fahrzeugrahmens am Achsrohr zu befestigen. Der hieraus resultierende Vorteil besteht in einer im Verhältnis zur Spur großen Rahmenbreite; außerdem können durch dicht an der Außenseite der Längsträger angeordnete Räder kurze und damit gering belastete Achsschenkel verwendet werden.

Auf der Zeichnung sind zwei Ausführungsbeispiele einer erfindungsgemäßen Kurbelachse dargestellt, und zwar zeigen:
- Fig. 1: eine im Bereich des Achsrohrs geschnittene Draufsicht auf eine erste Ausführungsform einer Kurbelachse mit durchgehendem Achsrohr,
- Fig. 2: einen Querschnitt gemäß der Schnittlinie II-II in Fig. 1 im fahrbereiten Zustand,
- Fig. 3: einen der Fig. 2 entsprechenden Schnitt bei abgesenktem Fahrzeugrahmen,
- Fig. 4: eine perspektivische Ansicht der linken Hälfte der Kurbelachse gemäß den Fig. 1 bis 3,
- Fig. 5: eine der Fig. 1 entsprechende Draufsicht auf eine zweite Ausführungsform einer aus zwei Halbachsen bestehenden Kurbelachse,
- Fig. 6: eine der Fig. 4 entsprechende perspektivische Darstellung der linken Hälfte der Kurbelachse gemäß Fig. 5,
- Fig. 7: eine schematische Darstellung eines mit einer erfindungsgemäßen Kurbelachse ausgestatteten Fahrzeugs in der Fahrstellung und
- Fig. 8: eine der Fig. 7 entsprechende Darstellung mit abgesenktem Fahrzeugrahmen und
- Fig. 9: eine der Fig. 4 entsprechende perspektivische Darstellung einer weiteren Ausführungsform.

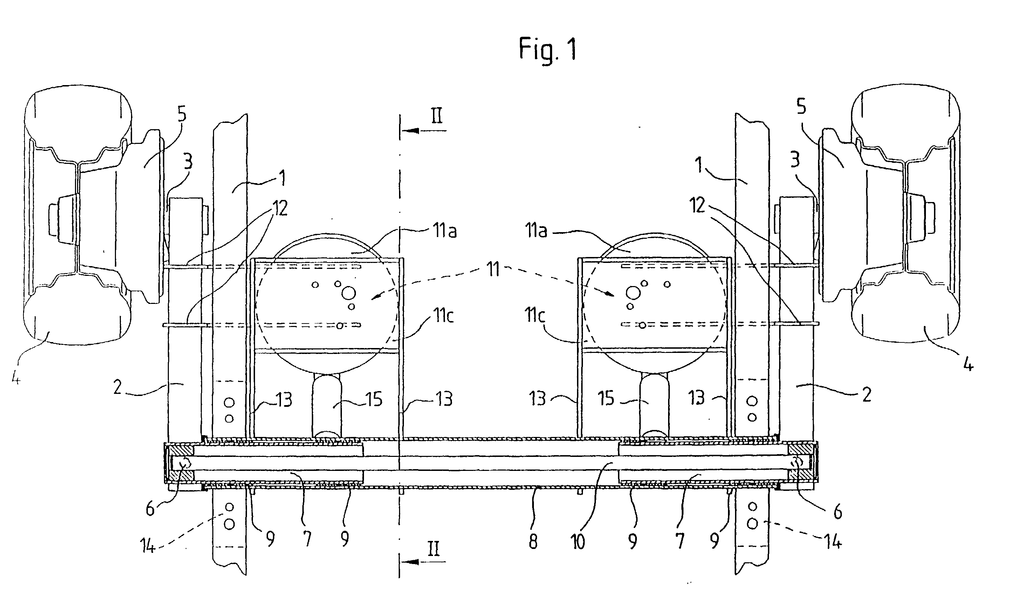

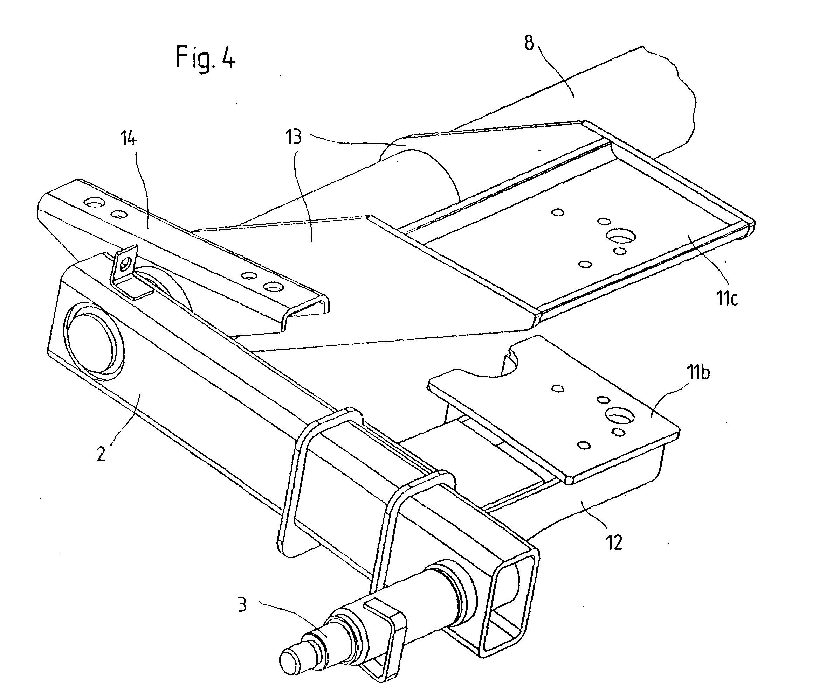

Die Fig. 1 bis 3 zeigen Teile zweier Längsträger 1 eines im übrigen nicht gezeichneten Fahrzeugrahmens, an dem ein erstes Ausführungsbeispiel einer Kurbelachse befestigt ist. Die linke Hälfte einer derartigen Kurbelachse ist perspektivisch in Fig. 4 gezeigt.

Wie insbesondere aus Fig. 1 hervorgeht, umfaßt die Kurbelachse zwei Längslenker 2, an deren einem Ende ein Achsstummel 3 angeordnet ist, auf dem eine ein Rad 4 tragende Nabe 5 drehbar gelagert ist. Das andere Ende des Längslenkers 2 ist mittels eines Bolzens 6 unverdrehbar an einem Führungsrohr 7 befestigt, das seinerseits drehbar in einem Achsrohr 8 gelagert ist, und zwar jeweils mit Hilfe zweier Lagerbuchsen 9. Beim dargestellten ersten Ausführungsbeispiel sind die beiden Führungsrohre 7 und damit die Längslenker 2 durch einen Torsionsstab 10 miteinander verbunden, der trotz der Einzelradaufhängung einen gewissen Federungsausgleich bewirkt.

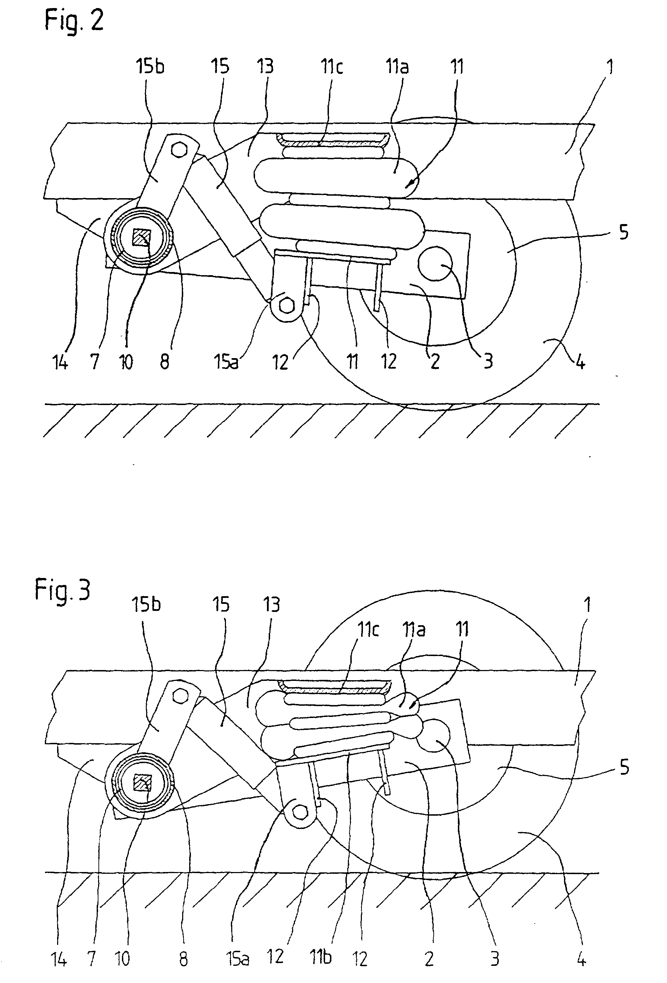

Die eigentliche Federung jedes Längslenkers 2 erfolgt mittels einer Luftfeder 11, deren Luftfederbalg 11a zwischen einer unteren Konsole 11b und einer oberen Konsole 11c angeordnet ist, wie insbesondere die Fig. 2 und 3 zeigen.

Die untere Konsole 11b ist über einen unteren Tragarm 12 unmittelbar mit dem Längslenker 2 verbunden, und zwar beim dargestellten Ausführungsbeispiel in einem Bereich zwischen dem Achsstummel 3 und dem Führungsrohr 7. Selbstverständlich ist es auch möglich, den Längslenker 2 über seine durch das Führungsrohr 7 gebildete Schwenkachse hinaus zu verlängern und den unteren Tragarm 12 im Bereich dieser Verlängerung mit dem Längslenker 2 zu verbinden.

Die obere Konsole 11c jeder Luftfeder 11 ist über einen oberen Tragarm 13 am Achsrohr 8 unverdrehbar befestigt, das seinerseits mittels Tragkonsolen 14 von unten starr an den Längsträgern 1 des Fahrzeugrahmens befestigt wird, vorzugsweise durch Schrauben.

Die als komplette Baueinheit ausgeführte Kurbelachse, von der in Fig. 4 die linke Hälfte perspektivisch gezeichnet ist, kann somit auf einfache Weise ausschließlich über die Tragkonsolen 14 an jeder gewünschten Stelle unter die Längsträger 1 des Fahrzeugrahmens geschraubt werden. Hilfsrahmen oder andere Zusatzkonstruktionen oder Veränderungen des Fahrzeugrahmens sind für den Anbau der Kurbelachse nicht erforderlich. Wie die Fig. 1 bis 3 erkennen lassen, kann zwischen der unteren Konsole 11b der Luftfeder 11 und dem Achsrohr 8 ein Schwingungsdämpfer 15 angeordnet werden, und zwar mittels einer am unteren Tragarm 12 befestigten unteren Halterung 15a und einer am Achsrohr 8 befestigten oberen Halterung 15b. Diese Anbringung eines Schwingungsdämpfers 15 ist beim ersten Ausführungsbeispiel am besten in den Fig. 2 und 3 zu erkennen.

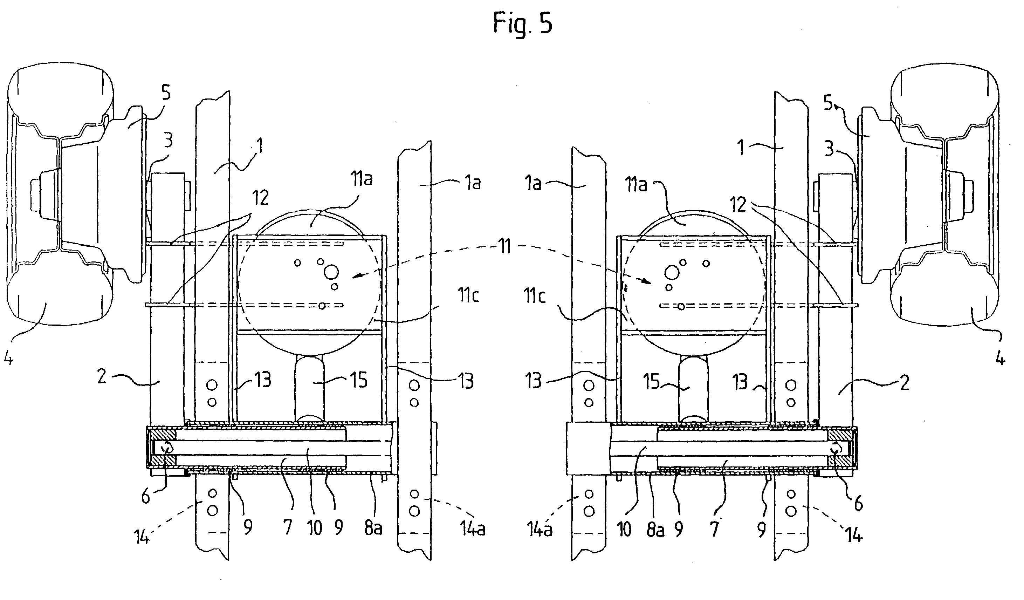

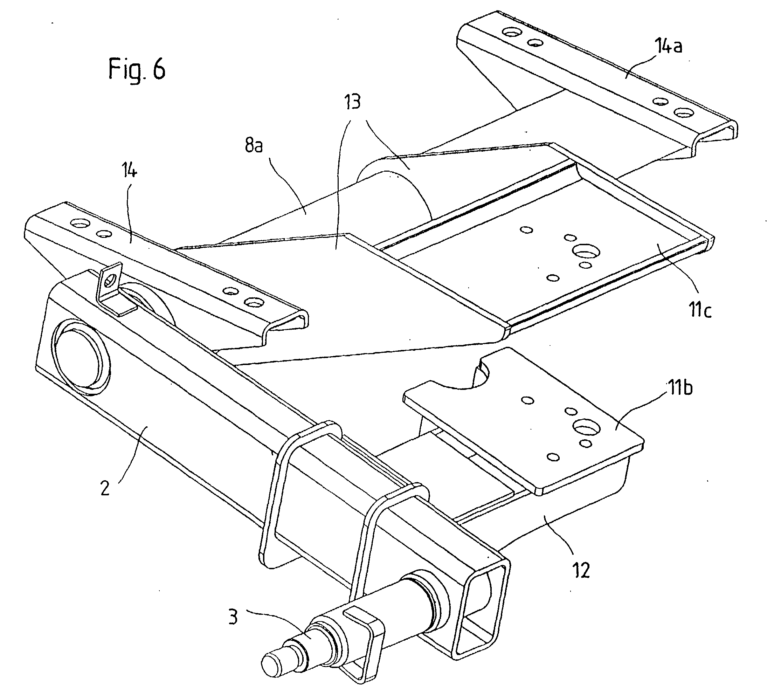

Das zweite Ausführungsbeispiel gemäß den Fig. 5 und 6 unterscheidet sich von der voranstehend beschriebenen ersten Ausführungsform dadurch, daß anstelle eines durchgehenden Achsrohres 8 zwei Achsrohrstücke 8a verwendet werden, so daß sich eine aus zwei Halbachsen bestehende Kurbelachse ergibt, die insbesondere Fig. 5 zeigt. Auch bei dieser Ausführungsform ist der Luftfederbalg 11a jeder Luftfeder 11 zwischen einer unteren Konsole 11b und einer oberen Konsole 11c angeordnet, wobei die untere Konsole 11b über einen unteren Tragarm 12 unmittelbar mit dem Längslenker 2 und die obere Konsole 11c über einen oberen Tragarm 13 mit dem Achsrohrstück 8a verbunden ist. Die beiden Achsrohrstücke 8a sind kürzer als die halbe Breite des Fahrzeugrahmens. Wie Fig. 5 erkennen läßt, sind die Achsrohrstücke 8a an ihrem dem Längslenker 2 zugewandten Ende wie bei der ersten Ausführungsform mittels einer Tragkonsole 14 an den äußeren Längsträgern 1 des Fahrzeugrahmens befestigt. Das innenliegende Ende jedes Achsrohrstückes 8a ist ebenfalls mittels einer Tragkonsole 14a an inneren Längsträgern 1a des Fahrzeugrahmens befestigt, wie insbesondere Fig. 5 erkennen läßt. Zwischen diesen inneren Längsträgern 1a verbleibt ein freier Raum, der beispielsweise den Durchtritt von Ladung nach unten gestattet. Selbstverständlich können die innenliegenden Enden der Achsrohrstücke 8a auch an Querträgern befestigt werden, wenn der Fahrzeugrahmen nicht über innere Längsträger verfügt.

Wie insbesondere die Fig. 4 und 6 erkennen lassen, bilden beide Ausführungsformen der Kurbelachsen kompakte Baueinheiten, die auf einfache Weise mittels der Tragkonsolen 14 bzw. 14 und 14a von unten an einen Fahrzeugrahmen angeschraubt werden können, ohne daß es spezieller Hilfskonstruktionen oder konstruktiver Änderungen der Fahrzeugrahmen bedarf. Da die Radaufstandskräfte unmittelbar vom Längslenker 2 über den unteren Tragarm 12 auf die untere Konsole 11b der Luftfeder 11 und von hier über die obere Konsole 11c und den oberen Tragarm 13 unmittelbar auf das Achsrohr 8 bzw. auf ein Achsrohrstück 8a übertragen werden, ergeben sich geringere Belastungen der Lager der Längslenker, so daß einfachere und preisgünstigere Lagerbuchsen 9 verwendet werden können. Neben einer einfacheren Montage ergibt sich somit der Vorteil einer konstruktiv einfacheren und raumsparenden sowie leichteren Achskonstruktion.

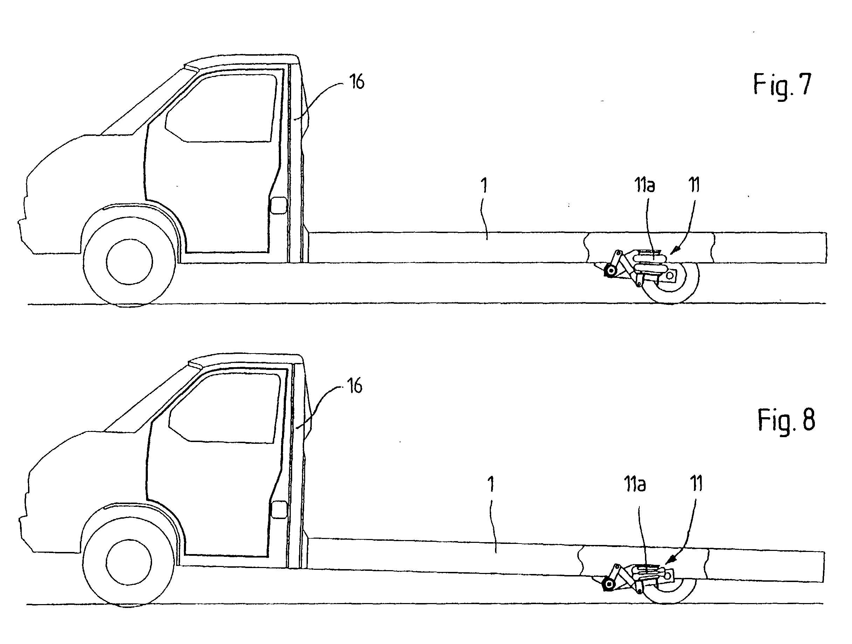

Die Fig. 7 und 8 zeigen, daß es mit den voranstehend beschriebenen Kurbelachsen möglich ist, das mit einem Führerhaus 16 versehene Fahrgestell eines Kraftfahrzeuges aus der in Fig. 7 dargestellten Fahrstellung in eine Beladestellung nach Fig. 8 abzusenken. Zu diesem Zweck wird die in der Fahrstellung gemäß Fig. 7 im Luftfederbalg 11a der Luftfeder 11 vorhandene Druckluft abgelassen, so daß das Gewicht des durch die Längsträger 1 symbolisierten Fahrzeugrahmens den Luftfederbalg 11a gemäß Fig. 8 zusammendrückt, wodurch der Fahrzeugrahmen am hinteren Ende abgesenkt wird. Eine derartige abgesenkte Belade- und Entladestellung der Kurbelachse ist auch in Fig. 3 gezeigt.

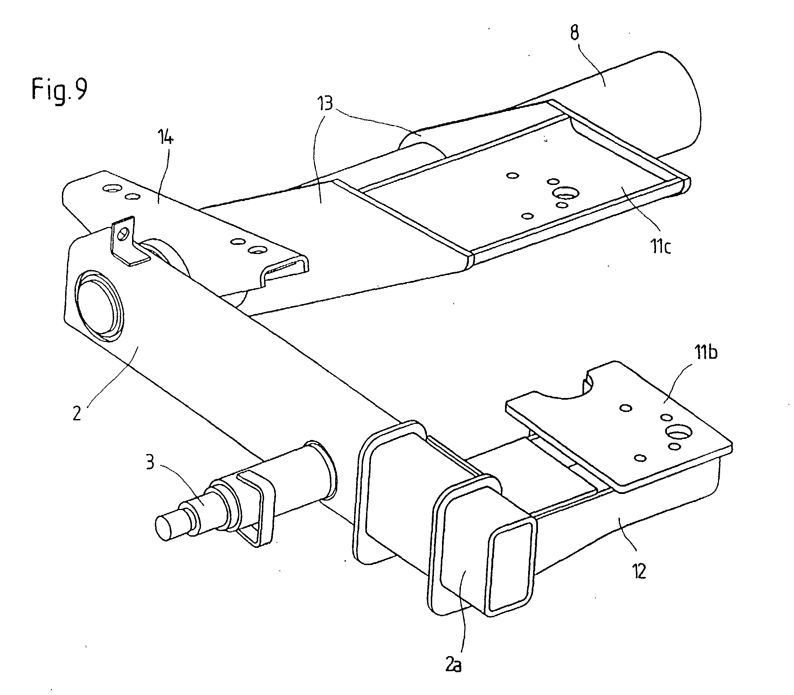

Während die Fig. 4 eine Anbringung des unteren Tragarmes 12 zwischen dem Achsstummel 3 und verschwenkbar gelagerten Ende des Längslenkers 2 zeigt, ist in Fig. 9 die alternative Befestigung des unteren Tragarmes 12 an einer Verlängerung 2a des Längslenkers 2 dargestellt, die ausgehend vom verschwenkbar gelagerten Ende des Längslenkers 2 somit den Achsstummel 3 überragt.

### Bezugszeichenliste

- 1: Längsträger
- 1a: Längsträger
- 2: Längslenker
- 2a: Verlängerung
- 3: Achsstummel
- 4: Rad
- 5: Nabe
- 6: Bolzen
- 7: Führungsrohr
- 8: Achsrohr
- 8a: Achsrohrstück
- 9: Lagerbuchse
- 10: Torsionsstab
- 11: Luftfeder
- 11a: Luftfederbalg
- 11b: untere Konsole
- 11c: obere Konsole
- 12: unterer Tragarm
- 13: oberer Tragarm
- 14: Tragkonsole
- 14a: Tragkonsole
- 15: Schwingungsdämpfer
- 15a: untere Halterung
- 15b: obere Halterung
- 16: Führerhaus

## Patentansprüche

1. Kurbelachse für Kraftfahrzeuge und Anhänger mit einzeln an jeweils einem Längslenker (2) gelagerten Rädern (4), wobei jeder Längslenker über ein an ihm befestigtes Führungsrohr (7) verschwenkbar in einem Achsrohr (8) gelagert ist, das über Tragkonsolen (14) mit den Längsträgern (1) des Fahrzeugrahmens verbindbar ist, und wobei jedes Rad (4) unabhängig vom anderen über eine zwischen zwei Konsolen (11b, 11c) angeordnete Luftfeder (11) abgefedert ist,
**dadurch gekennzeichnet,**
**daß** die untere Konsole (11b) jeder Luftfeder (11) über einen unteren Tragarm (12) unmittelbar am jeweiligen Längslenker (2) und die obere Konsole (11c) jeder Luftfeder (11) über einen oberen Tragarm (13) am Achsrohr (8) befestigt ist.

2. Kurbelachse nach Anspruch 1, **dadurch gekennzeichnet, daß** der untere Tragarm (12) jeder Luftfeder (11) zwischen dem Achsstummel (3) und dem zur Lagerung des Längslenkers (2) im Achsrohr (8) dienenden Führungsrohr (7) am Längslenker (2) befestigt ist.

3. Kurbelachse nach Anspruch 1, **dadurch gekennzeichnet, daß** der untere Tragarm (12) jeder Luftfeder (11) an einer den Achsstummel (3) überragenden Verlängerung des Längslenkers (2) befestigt ist.

4. Kurbelachse nach mindestens einem der Ansprüche 1 bis 3, **dadurch gekennzeichnet, daß** die Führungsrohre (7) der beiden Längslenker (2) in einem durchgehenden, über die Tragkonsolen (14) starr mit dem Fahrzeugrahmen verbundenen Achsrohr (8) gelagert sind.

5. Kurbelachse nach mindestens einem der Ansprüche 1 bis 3, **dadurch gekennzeichnet, daß** jedes Führungsrohr (7) in einem eigenen Achsrohrstück (8a) gelagert ist, das nur über einen Teil der halben Fahrzeugrahmenbreite verläuft und mittels einer zweiten Tragkonsole (14a) mit dem Fahrzeugrahmen verbindbar ist.

6. Kurbelachse nach mindestens einem der Ansprüche 1 bis 5, **dadurch gekennzeichnet, daß** die Tragarme (13) für die oberen Konsolen (11c) der Luftfedern (11) im Bereich zwischen den Längsträgern (1) des Fahrzeugrahmens am Achsrohr (8) befestigt sind.

## Claims

1. Crank axle for motor vehicles and trailers with wheels (4) mounted independently on respective trailing arms (2), each trailing arm being mounted pivotably, by means of a guide tube (7) attached to it, in an axle tube (8) that can be connected to the longitudinal members (1) of the vehicle frame by means of supporting brackets (14), and each wheel (4) being cushioned independently of the other by means of a pneumatic spring (11) arranged between two brackets (11b, 11c), **characterized in that** the lower bracket (11b) of each pneumatic spring (11) is attached directly to the respective trailing arm (2) by means of a lower supporting arm (12), and the upper bracket (11c) of each pneumatic spring (11) is attached to the axle tube (8) by means of an upper supporting arm (13).

2. Crank axle according to Claim 1, **characterized in that** the lower supporting arm (12) of each pneumatic spring (11) is attached to the trailing arm (2) between the axle stub (3) and the guide tube (7) used to mount the trailing arm (2) in the axle tube (8).

3. Crank axle according to Claim 1, **characterized in that** the lower supporting arm (12) of each pneumatic spring (11) is attached to an extension of the trailing arm (2) that projects beyond the axle stub (3).

4. Crank axle according to at least one of Claims 1 to 3, **characterized in that** the guide tubes (7) of the two trailing arms (2) are mounted in a continuous axle tube (8) connected rigidly to the vehicle frame by means of the supporting brackets (14) .

5. Crank axle according to at least one of Claims 1 to 3, **characterized in that** each guide tube (7) is mounted in a separate axle tube section (8a) that extends over only part of half the width of the vehicle frame and can be connected to the vehicle frame by means of a second supporting bracket (14a).

6. Crank axle according to at least one of Claims 1 to 5, **characterized in that** the supporting arms (13) for the upper brackets (11c) of the pneumatic springs (11) are attached to the axle tube (8) in the region between the trailing arms (1) of the vehicle frame.

## Revendications

1. Essieu à bras pour véhicules automobiles et pour remorques, comportant des roues (4) montées individuellement sur un bras oscillant longitudinal (2) respectif, chaque bras oscillant longitudinal étant monté en basculement dans un tube d'essieu (8) via un tube de guidage (7) fixé sur ledit bras, ledit tube d'essieu pouvant être relié aux supports longitudinaux (1) du châssis du véhicule via des consoles porteuses (14), et chaque roue (4) étant suspendue indépendamment de l'autre via un ressort pneumatique (11) agencé entre deux consoles (11b, 11c), **caractérisé en ce que** la console inférieure (11b) de chaque ressort pneumatique (11) est fixée via une branche porteuse inférieure (12) directement sur le bras oscillant longitudinal (2) respectif, et la console supérieure (11c) de chaque ressort pneumatique (11) est fixée via une branche porteuse supérieure (13) sur le tube d'essieu (8).

2. Essieu à bras selon la revendication 1,
**caractérisé en ce que** la branche porteuse inférieure (12) de chaque ressort pneumatique (11) est fixée entre le moignon d'axe (3) et le tube de guidage (7) servant au montage du bras oscillant longitudinal (2) dans le tube d'essieu (8) sur le bras oscillant longitudinal (2).

3. Essieu à bras selon la revendication 1,
**caractérisé en ce que** la branche porteuse inférieure (12) de chaque ressort pneumatique (11) est fixée sur un prolongement du bras oscillant longitudinal (2), lequel dépasse au-delà du moignon d'axe (3).

4. Essieu à bras selon l'une au moins des revendications 1 à 3, **caractérisé en ce que** les tubes de guidage (7) des deux bras oscillants longitudinaux (2) sont montés dans un tube d'essieu (8) continu relié rigidement au châssis de véhicule via les consoles porteuses (14).

5. Essieu à bras selon l'une au moins des revendications 1 à 3, **caractérisé en ce que** chaque tube de guidage (7) est monté dans un propre tronçon de tube d'essieu (8a) qui ne s'étend que sur une partie de la moitié de la largeur du châssis de véhicule et qui peut être relié au châssis de véhicule au moyen d'une seconde console porteuse (14a).

6. Essieu à bras selon l'une au moins des revendications 1 à 5, **caractérisé en ce que** les branches porteuses (13) pour les consoles supérieures (11c) des ressorts pneumatiques (11) sont fixées sur le tube d'essieu (8) dans la zone entre 1es supports longitudinaux (1) du châssis de véhicule.
